# EUROPÄISCHE PATENTSCHRIFT

(11) **EP 2 332 712 B1**
(45) Veröffentlichungstag und Bekanntmachung des Hinweises auf die Patenterteilung: **14.08.2013**
(21) Anmeldenummer: 10014643.0
(22) Anmeldetag: 16.11.2010
(51) Int. Cl.: B29C 45/14

(54) **Einlegestempel sowie Verfahren zum Einlegen von Banderole- und Bodenlabel in eine Spritzgussform**
Insertion stamp and method for inserting bands and base labels into an injection mould
Timbre d'insertion et procédé d'insertion de banderoles et de étiquettes de sol dans un moule de moulage par injection

(30) Priorität: 11.12.2009 DE 102009059039
(43) Veröffentlichungstag der Anmeldung: 15.06.2011
(73) Patentinhaber: Marbach moulds & automation GmbH, 72574 Bad Urach (DE)
(72) Erfinder: Döbler, Daniel, 72813 St. Johann (DE)
(74) Vertreter: Jackisch-Kohl, Anna-Katharina

(56) Entgegenhaltungen:
- EP-A1- 0 519 142
- JP-A- 2003 340 876
- JP-A- 2006 056 559
- US-A- 5 053 101

## Beschreibung

Die Erfindung betrifft einen Einlegestempel nach dem Oberbegriff des Anspruches 1 sowie ein Verfahren zum Einlegen von Banderole- und Bodenlabel in eine Spritzgussform nach dem Oberbegriff des Anspruches 10.

Aus der US-A-5 053 101 ist es bekannt, an der Mantelfläche sowie am Boden eines Einlegestempels das Banderole- und das Bodenlabel durch Saugkraft zu halten und diese mit dem Einlegestempel in die geöffnete Spritzgussform einzuführen. Dort werden beide Label gleichzeitig an die Spritzgussform übergeben, in der die Label durch ein angelegtes Vakuum an der Seitenwand und am Boden des Einspritzraumes festgehalten werden, während das Vakuum im Einlegestempel aufgehoben wird.

Es ist weiter bekannt, Kunststoffbehälter so herzustellen, dass zumindest ein Teil der Seitenwand und der Boden durch ein Banderole- sowie durch ein Bodenlabel gebildet werden. An diese Label wird der Kunststoff zur Herstellung des Kunststoffbehälters angespritzt. Diese Labels werden in die Spritzgussform eingelegt. Hierzu wird ein Einlegestempel verwendet, der zwei mit Abstand nebeneinander liegende Halteteile aufweist. Der eine Halteteil ist für das Banderolelabel und der andere Halteteil für das Bodenlabel vorgesehen. Dieser Einlegestempel wird zunächst zur Spritzgussform gefahren und dann so abgesenkt, dass der erste Halteteil das Banderolelabel in die Spritzgussform einlegen kann. Anschließend wird der Einlegestempel zurückgefahren, so dass der erste Halteteil aus der Spritzgussform gelangt. Anschließend wird der Einlegestempel so weit gegenüber der Spritzgussform verschoben, bis der zweite Halteteil in die Spritzgussform abgesenkt werden kann, um nunmehr das Bodenlabel an die Spritzgussform zu übergeben. Das Einlegeverfahren mittels eines solchen Einlegestempels ist sehr zeitintensiv, wodurch die Leistung des Spritzgusssystems entsprechend gering ist.

Der Erfindung liegt die Aufgabe zugrunde, den gattungsgemäßen Einlegestempel und das gattungsgemäße Verfahren so auszubilden, dass das Banderole- und das Bodenlabel in kurzer Zeit in die Spritzgussform eingelegt werden können.

Diese Aufgabe wird beim gattungsgemäßen Einlegestempel erfindungsgemäß mit den kennzeichnenden Merkmalen des Anspruches 1 und beim gattungsgemäßen Verfahren erfindungsgemäß mit den Merkmalen des Anspruches 10 gelöst.

Der erfindungsgemäße Einlegestempel zeichnet sich dadurch aus, dass er mit einem Außenstempel versehen ist, in dem der Innenstempel gegenüber dem Außenstempel verschiebbar gelagert ist. Dadurch ergibt sich nicht nur eine sehr kompakte Bauform des Einlegestempels, sondern auch eine zeitsparende Übergabe des Banderole- und des Bodenlabels an die Spritzgussform. Aufgrund der relativen Verschiebbarkeit des Innenstempels zum Außenstempel ist es möglich, den Einlegestempel in einem Hub in die Spritzgussform einzufahren und das Banderole- und das Bodenlabel zu übergeben.

Vorteilhaft weist der Außenstempel Mittel, vorzugsweise Vakuumbohrungen, zum Festhalten des Banderolelabels auf.

Der Innenstempel des erfindungsgemäßen Einlegestempels ist mit Mitteln, vorzugsweise wenigstens einem Sauger, versehen, mit dem das Bodenlabel festgehalten wird.

Damit der Innenstempel den Relativhub zum Außenstempel durchführen kann, ist er mittels eines Antriebes verschiebbar.

Eine sehr einfache Ausführung ergibt sich, wenn der Innenstempel in Richtung auf eine Grundstellung belastet, vorzugsweise federbelastet ist. Dann wird der Innenstempel nach der Übergabe des Bodenlabels an die Spritzgussform zurückgefahren. Vorteilhaft wird wenigstens eine Druckfeder eingesetzt, die den Innenstempel nach der Labelübergabe selbsttätig in die Grundstellung zurückfährt.

Vorteilhaft ist es, wenn der Innenstempel gegenüber dem Außenstempel begrenzt verschiebbar ist.

Es ist von Vorteil, wenn der Verschiebeweg des Innenstempels anschlagbegrenzt ist. Dann ist eine problemlose Übergabe des Bodenlabels an die Spritzgussform gewährleistet.

Von besonderem Vorteil ist, dass der Außenstempel mit wenigstens einem Anschlag versehen ist, der im Verschiebeweg des Innenstempels liegt. Läuft er auf den Anschlag auf, ist eine weitere Ausfahrbewegung des Innenstempels nicht mehr möglich.

Eine besonders einfache und zuverlässige Ausgestaltung des Einlegestempels ergibt sich, wenn der Außenstempel wenigstens ein axial wirkendes Führungselement für den Innenstempel aufweist. Dann kann der Innenstempel zuverlässig in seine Übergabeposition verschoben werden.

Beim erfindungsgemäßen Verfahren werden das Banderole- und das Bodenlabel in einem Hub des Einlegestempels in die Spritzgussform eingelegt. Beide Label befinden sich am Einlegestempel, wenn er in die Spritzgussform eingefahren wird. Dadurch können in diesem einzigen Verfahrenshub sowohl das Banderolelabel als auch das Bodenlabel in die Spritzgussform eingelegt werden. Nach dem Einfahren in die Spritzgussform wird zunächst das Banderolelabel vom Einlegestempel übergeben. Anschließend wird durch die Ausfahrbewegung des Innenstempels gegenüber dem Außenstempel das Bodenlabel in die Spritzgussform eingelegt.

Von besonderem Vorteil hierbei ist, dass der Einlegestempel die Label so in die Spritzgussform einlegt, dass das Bodenlabel das Banderolelabel innenseitig überlappt. Dadurch ist sichergestellt, dass während des Spritzvorganges kein Kunststoff an die Außenseite der Label gelangt.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in einem Schnitt einen erfindungsgemäßen Einlegestempel,
- Fig. 2: im Schnitt den erfindungsgemäßen Einlegestempel in einer ersten Stellung,
- Fig. 3: in einer Darstellung entsprechend Fig. 2 den Einlegestempel in ei- ner zweiten Stellung,
- Fig. 4: in schematischer Darstellung das Einbringen von Spritzmaterial in die Spritzgussform mit eingelegtem Banderole- und eingelegtem Bodenlabel.

Mit dem im Folgenden beschriebenen Einlegestempel lassen sich in einem einstufigen Einlegeverfahren Becher aus Kunststoff spritzen, die mit einem Boden- und einem Banderolelabel versehen sind. Der Einlegestempel ist hierbei so ausgelegt, dass die Labels so in eine Spritzgussform eingelegt werden, dass der eingespritzte Kunststoff nicht zwischen Banderolen- und Bodenlabel nach außen treten kann.

Der Einlegestempel 4 hat einen Außenstempel 1. Er hat einen Druckraum 2, in dem ein Kolben 3 abgedichtet verschiebbar ist. Er ist Bestandteil eines Innenstempels 7, der aus dem Außenstempel 1 vorsteht. Der Kolben 3 ist umfangsseitig mit wenigstens einer Dichtung 5 versehen, mit welcher der Kolben 3 dichtend an der Innenwand 6 des Druckraumes 2 anliegt.

Der Druckraum 2 ist an der Austrittsseite des Innenstempels 7 durch einen Deckel 8 geschlossen, der in den Außenstempel 1 eingesetzt ist. Er hat einen verbreiterten Rand 9, mit dem er auf einer radialen Schulterfläche 10 der Innenwand 6 des Druckraumes 2 aufliegt. Der vom Innenstempel 7 durchsetzte Deckel 8 ist innenseitig mit einer Ringdichtung 11 versehen, die dichtend an der Außenseite des Innenstempels 7 anliegt. Der Deckel 8 ist in geeigneter Weise im Außenstempel 1 befestigt. Er liegt vertieft in einer Vertiefung 12, die in der Oberseite 13 des Außenstempels 1 vorgesehen ist.

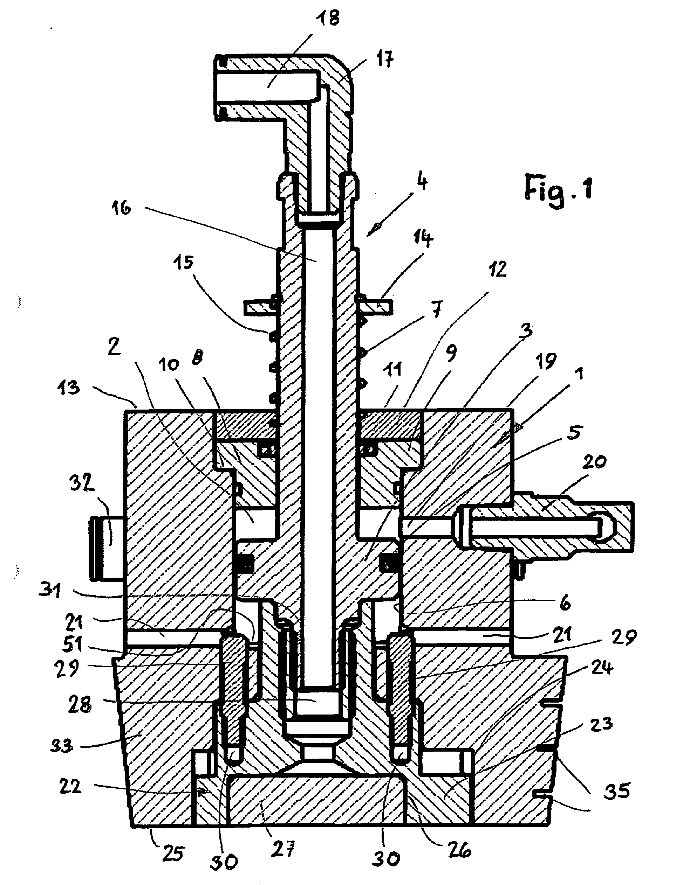

Außerhalb des Außenstempels 1 sitzt axial fest auf dem Innenstempel 7 ein Federteller 14, an dem sich das eine Ende wenigstens einer Druckfeder 15 abstützt. Sie ist im Ausführungsbeispiel als Schraubendruckfeder ausgebildet und umgibt den Innenstempel 7. Das in Fig. 1 untere Ende der Druckfeder 15 stützt sich auf dem Deckel 8 ab. Durch die Druckfeder 15 wird der Innenstempel 7 aufwärts belastet.

Der Innenstempel 7 ist von einer Vakuumbohrung 16 axial durchsetzt. In das obere Ende des Innenstempels 7 ist ein Vakuumanschlussstück 17 eingesetzt, vorzugsweise eingeschraubt. Es ist beispielhaft als Winkelstück ausgebildet und hat eine Zuführbohrung 18, die in die Vakuumbohrung 16 des Innenstempels 7 mündet.

Nahe der Unterseite des Deckels 8 mündet in den Druckraum 2 wenigstens eine Druckluftbohrung 19, an die ein Druckluftanschluss 20 an der Außenseite des Außenstempels 1 angeschlossen ist. Über den Druckluftanschluss 20 wird Druckluft in den Druckraum 2 eingebracht, wenn der Kolben 3 und damit der Innenstempel 7 gegen die Kraft der Druckfeder 15 nach unten verschoben werden soll.

Im Bereich unterhalb des Kolbens 3 mündet in den Druckraum 2 wenigstens eine Entlüftungsbohrung 21, die den Druckraum 2 mit der Atmosphäre verbindet.

Der Druckraum 2 im Außenstempel 1 wird nach unten durch einen Saugerhalter 22 begrenzt, der von unten in den Außenstempel 1 eingesetzt ist. Der Saugerhalter 22 hat einen im Durchmesser erweiterten unteren Rand 23, der an der Innenwand einer Ausnehmung 24 anliegt, die in die Unterseite 25 des Außenstempels 1 mündet. Zentral ist der Saugerhalter 22 an seiner Unterseite mit einer Vertiefung 26 versehen, in die ein Sauger 27 eingesetzt ist. Er kann beispielsweise eine Saugermatte oder ein Faltenbalgsauger sein.

In die Vertiefung 26 mündet eine im Durchmesser wesentlich schmalere, axial im Saugerhalter 22 vorgesehene Durchlassöffnung 28, deren Achse mit der Achse der Vakuumbohrung 16 des Innenstempels 7 fluchtet.

Der Saugerhalter 22 ist im Außenstempel 1 begrenzt axial verschiebbar gelagert. Zur Führung des Saugerhalters 22 dienen über seinen Umfang verteilt angeordnete Führungselemente 29, vorzugweise Führungsbolzen. Sie erstrecken sich axial im Außenstempel 1 und greifen in axial verlaufende Führungsbohrungen 30 im Saugerhalter 22 ein.

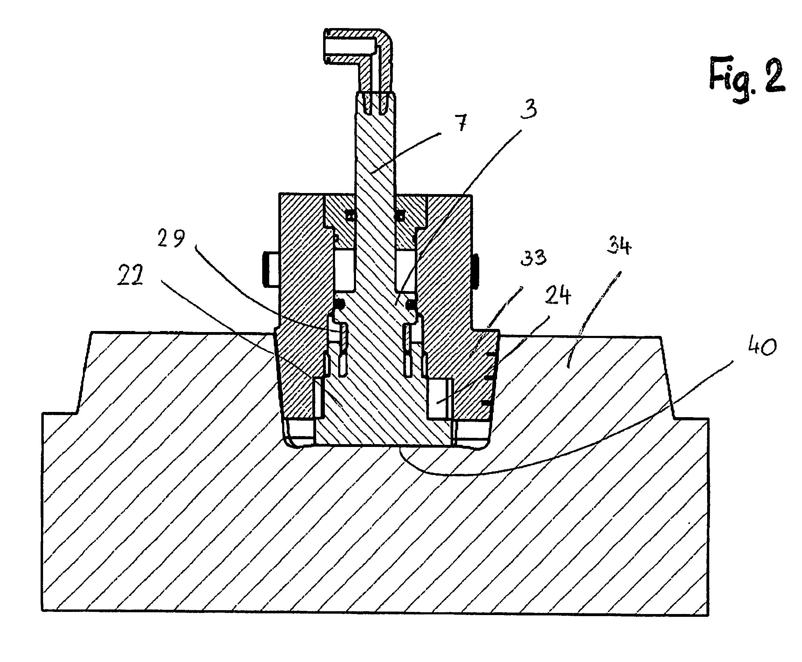

Auch die Führungsbolzen 29 ragen in den Druckraum 2 und können Anschläge für den Kolben 3 in dessen unterer Lage (Fig. 2) bilden. Der Anschlag für den Kolben 3 wird vorteilhaft durch den Boden 51 (Fig. 1) des Druckraumes 2 gebildet. Der Innenstempel 7 ragt mit einem Endabschnitt 31 in den Saugerhalter 22 und ist axial fest mit ihm in geeigneter Weise verbunden.

Der Außenstempel 1 hat wenigstens einen Vakuumanschluss 32, der beispielhaft in Höhe des Druckraumes 2 an der Außenseite des Außenstempels 1 vorgesehen ist.

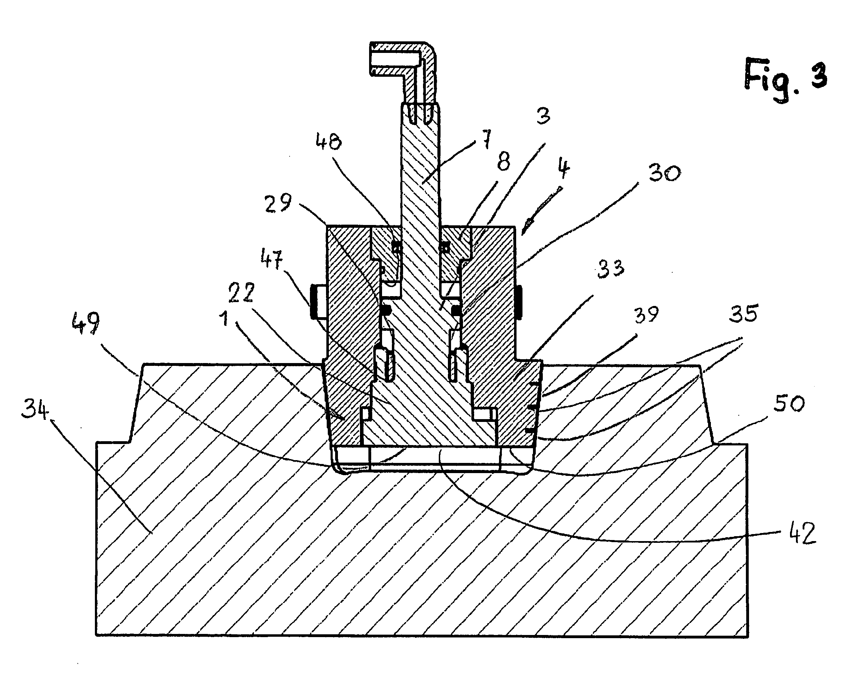

Der Außenstempel 1 hat einen im Umriss vergrößerten Endabschnitt 33, mit dem der Einlegestempel in eine Spritzgussform 34 (Fig. 2 und 3) eingesetzt wird. Am Umfang dieses Endabschnittes 33 befinden sich über die Höhe und den Umfang verteilt angeordnete Vakuumöffnungen 35, mit deren Hilfe ein Banderoleetikett 39 gehalten werden kann. Je nach Form des zu spritzenden Bechers kann der Endabschnitt 33 Konus- oder Zylinderform aufweisen. Der Endabschnitt 33 kann kreisförmigen Querschnitt haben, aber je nach zu spritzendem Behälter auch unrunden oder eckigen Umriss haben.

Da der Innenstempel 7 relativ zum Außenstempel 1 begrenzt verschiebbar ist, lassen sich in einem einstufigen Einlegeverfahren das Banderole- und das Bodenetikett 39, 42 für den zu spritzenden Behälter in die Spritzgussform 34 einlegen.

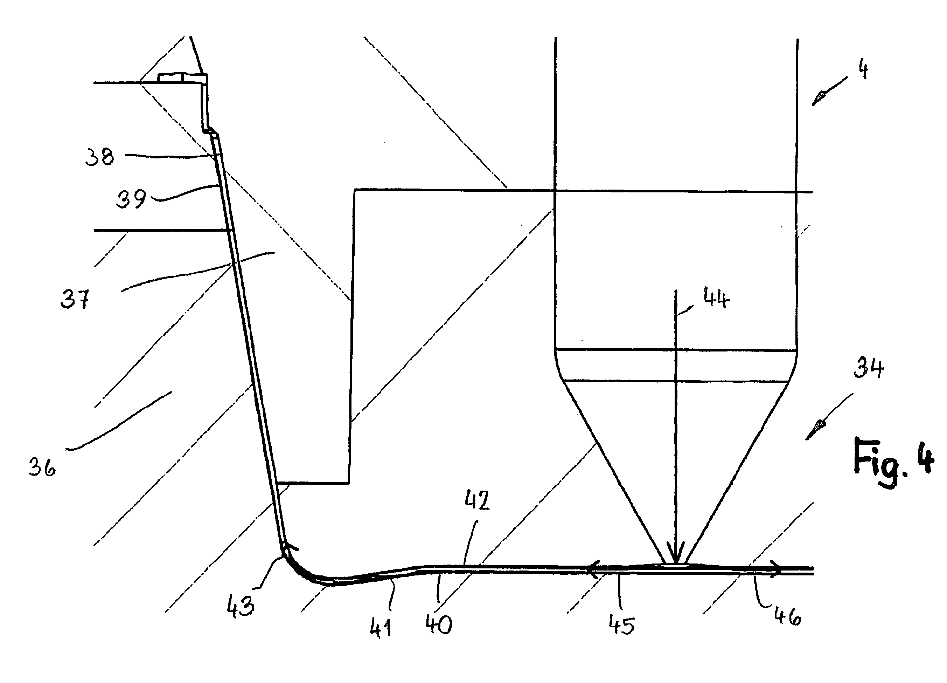

Fig. 4 zeigt einen Teil der Spritzgussform mit einer Matrize 36 und einem Kern 37. Er begrenzt zusammen mit der Matrize 36 einen Einspritzraum 38, in den der Kunststoff zur Herstellung des Behältnisses eingespritzt wird. An der Wandung des Einspritzraumes 38 liegt das Banderolelabel 39 an. Es erstreckt sich am unteren Ende bis auf den Boden 40 des Einspritzraumes 38. Der untere Rand des Banderolelabels 39 ist mit 41 angegeben. Der untere Bereich des Banderolelabels 39 wird von einem Bodenlabel 42 überlappt, das auf dem Boden 40 des Einspritzraumes 38 aufliegt und mit seinem äußeren Rand 43 bis in die Höhe der Seitenwand des Einspritzraumes 38 liegt.

Der Kunststoff wird in Pfeilrichtung 44 mittig im Bodenbereich des Einspritzraumes 38 eingespritzt. Der Kunststoff verteilt sich in alle Richtungen längs des Bodens 40, wie durch die eingezeichneten Strömungspfeile 45, 46 angegeben ist. Der Kunststoff verteilt sich auf der Innenseite des Bodenlabels 42 und der Innenseite des Banderolelabels 39. Da das Bodenlabel 42 das Banderolelabel 39 innenseitig überlappt, tritt kein Kunststoff an die Außenseite des zu spritzenden Behältnisses, so dass das Behältnis einwandfrei gespritzt werden kann.

Fig. 3 zeigt den Einlegestempel 4 in seiner Ausgangsstellung. Längs des Umfanges seines Endabschnittes 33 ist das Banderolelabel 39 mit Hilfe der Vakuumöffnungen 35 durch Saugkraft gehalten. Der Innenstempel 7 ist unter Federkraft so weit aufwärts verschoben, dass die Führungsbolzen 29 am Boden 47 der Führungsbohrungen 30 des Saugerhalters 22 anliegen. In dieser Lage hat der Kolben 3 Abstand von der Unterseite 48 des Deckels 8.

Zunächst wird das Bodenlabel 42 an der Unterseite des Einlegestempels 4 angelegt und mittels des Saugerhalters 22 gehalten. Die Unterseite 49 des Saugerhalters 22 liegt in dieser Ausgangsstellung des Innenstempels 7 in einer Ebene mit der Unterseite 50 des Außenstempels 1. Anschließend wird das Banderolelabel 39 am Einlegestempel 4 aufgelegt und mit Hilfe des über die Vakuumöffnungen 35 wirkenden Unterdruckes an der Außenwand des Endabschnittes 33 gehalten. Da zunächst das Bodenlabel 42 und erst anschließend das Banderolelabel 39 am Einlegestempel 4 angelegt werden, ist die innenseitige Überlappung des Banderolelabels 39 durch das Bodenlabel 42 sichergestellt.

Nach dem Auflegen der beiden Label 39, 42 wird der Einlegestempel 4 vor und anschließend in die Spritzgussform eingefahren. In der Spritzgussform 34 wird das Banderolelabel 39 übergeben, das an der Innenwand des Einspritzraumes 38 mittels Unterdruck gehalten wird. Diese Situation ist in Fig. 3 dargestellt.

Anschließend wird der Innenstempel 7 relativ zum Außenstempel 1 so weit nach unten gefahren (Fig. 2), dass das Bodenlabel 42 auf den Boden 40 des Einspritzraumes 38 aufgelegt werden kann. Der Boden 40 ist in bekannter Weise mit Vakuumöffnungen versehen, damit das angelegte Vakuum das Bodenlabel 42 am Boden 40 festhalten kann. Bei der Übergabe der beiden Label 39, 42 wird das Vakuum im Einlegestempel 4 aufgehoben, so dass der Einlegestempel anschließend aus der Spritzgussform 34 herausgefahren werden kann, während die Label 39, 42 in der Spritzgussform 34 festgehalten werden. Anschließend kann die Spritzgussform 34 geschlossen und der Kunststoff in der beschriebenen Weise eingespritzt werden.

Da zum Einlegen der beiden Label 39, 42 in die Spritzgussform 34 nur ein Hub des Einlegestempels 4 erforderlich ist, ergibt sich eine sehr kurze Werkzeugeingriffszeit, so dass in der Zeiteinheit eine hohe Stückzahl an zu spritzenden Behältern erreicht wird. Trotz dieser kurzen Werkzeugeingriffszeiten werden die Behälter zuverlässig gespritzt. Insbesondere dringt kein Kunststoff auf die Außenseite des Behältnisses.

Der Kolben 3 des Innenstempels 7 kann außer durch Druckluft beispielsweise auch durch Hydraulikmedium, aber auch durch mechanische Verschiebeeinrichtungen verschoben werden. Die beiden Label 39, 42 können außer mit Unterdruck beispielsweise auch mittels statischer Aufladung am Einlegestempel 4 und/oder im Spritzgusswerkzeug 34 gehalten werden.

Die Entlüftungsbohrungen 21 gewährleisten, dass der Kolben 3 bei seiner Druckbeaufschlagung zuverlässig nach unten verschoben werden kann. Der maximale Hub des Kolbens 3 ist erreicht, wenn er an der Stirnseite der Führungsbolzen 29 zur Anlage kommt (Fig. 2). Bei diesem Zusatzhub fährt der Saugerhalter 22 nach unten aus der Ausnehmung 24 im Endabschnitt 3 des Außenstempels 1 teilweise aus.

Nach der Übergabe der Label 39, 42 wird der Druckraum 2 druckentlastet. Der Kolben 3 wird dann durch die Kraft der Druckfeder 7 in die Ausgangsstellung gemäß Fig. 3 zurückgefahren, so dass die nächsten Label 39, 42 aufgenommen werden können. Diese Rückführung des Innenstempels 7 in die Ausgangslage erfolgt bereits während des Ausfahrens des Einlegestempels 4 aus der Spritzgussform 34. Dadurch können die Taktzeiten zwischen aufeinanderfolgenden Einlegevorgängen sehr kurz gehalten werden.

Der Antrieb des Innenstempels 7 kann auf jede geeignete Weise ausgebildet sein. So kann ein außen liegender Pneumatikzylinder, ein außen liegender Hydraulikzylinder, ein elektrischer Linearantrieb, ein Servoantrieb mit Spindel und dergleichen eingesetzt werden.

Anstelle der Rückhubfeder 15 kann auch ein doppeltwirkender Zylinder oder ähnliches verwendet werden. In diesem Fall wird der Kolben 3 auf beiden Seiten beaufschlagt, je nach Verschieberichtung des Innenstempels 7.

Für den Innenstempel 7 kann nicht nur jede geeignete Antriebstechnik für den Hub eingesetzt werden, sondern auch jede geeignete Hubbegrenzung. Es kann ein mechanischer Anschlag, ein Werkzeug als Gegenanschlag, eine Hubbegrenzung durch Servoantrieb oder elektrischem Linearantrieb herangezogen werden.

## Patentansprüche

1. Einlegestempel zum Einlegen wenigstens eines Banderole- und wenigstens eines Bodenlabels in eine Spritzgussform zur Herstellung von Kunststoffbehältern,
**dadurch gekennzeichnet, dass** der Einlegestempel (4) einen Außenstempel (1) und einen Innenstempel (7) aufweist, der gegenüber dem Außenstempel (1) verschiebbar ist.

2. Einlegestempel nach Anspruch 1,
**dadurch gekennzeichnet, dass** der Außenstempel (1) Mittel (35), vorzugsweise Vakuumbohrungen, zum Festhalten des Banderolelabels (39) aufweist.

3. Einlegestempel nach Anspruch 1 oder 2,
**dadurch gekennzeichnet, dass** der Innenstempel (7) Mittel (23, 27), vorzugsweise wenigstens einen Sauger, zum Festhalten des Bodenlabels (42) aufweist.

4. Einlegestempel nach einem der Ansprüche 1 bis 3,
**dadurch gekennzeichnet, dass** der Innenstempel (7) mittels eines Antriebes (3) verschiebbar ist.

5. Einlegestempel nach einem der Ansprüche 1 bis 4,
**dadurch gekennzeichnet, dass** der Innenstempel (7) in Richtung auf eine Grundstellung belastet, vorzugsweise federbelastet ist.

6. Einlegestempel nach einem der Ansprüche 1 bis 5,
**dadurch gekennzeichnet, dass** der Innenstempel (7) gegenüber dem Außenstempel (1) begrenzt verschiebbar ist.

7. Einlegestempel nach einem der Ansprüche 1 bis 6,
**dadurch gekennzeichnet, dass** der Verschiebeweg des Innenstempels (7) anschlagbegrenzt ist.

8. Einlegestempel nach Anspruch 7,
**dadurch gekennzeichnet, dass** der Außenstempel (1) wenigstens einen Anschlag (29, 51) aufweist, der im Verschiebeweg des Innenstempels (7) liegt.

9. Einlegestempel nach einem der Ansprüche 1 bis 8,
**dadurch gekennzeichnet, dass** der Außenstempel (1) wenigstens ein axial wirkendes Führungselement (29) für den Innenstempel (7) aufweist.

10. Verfahren zum Einlegen von Banderole- und Bodenlabel (39, 42) in eine Spritzgussform (34) mit einem Einlegestempel nach einem der Ansprüche 1-9, bei dem die Label (39, 42) mittels eines Einlegestempels (4) eingelegt werden, wobei das Banderole- und das Bodenlabel (39, 42) in einem Hub des Einlegestempels (4) in die Spritzgussform (34) eingelegt werden, wobei nach dem Einfahren in die Spritzgussform (34) der Einlegestempel (4) zunächst das Banderolelabel (39) und anschließend durch eine Ausfahrbewegung des Innenstempels (7) das Bodenlabel (42) an die Spritzgussform (34) übergibt.

11. Verfahren nach Anspruch 10,
**dadurch gekennzeichnet, dass** der Einlegestempel (4) die Label (39, 42) so übergibt, dass das Bodenlabel (42) das Banderolelabel (39) innenseitig überlappt.

## Claims

1. Insertion stamp for inserting at least one band label and at least one base label into an injection mould for producing plastic containers, **characterised in that** the insertion stamp (4) comprises an outer stamp (1) and an inner stamp (7), which is slidable in relation to the outer stamp (1).

2. Insertion stamp according to claim 1,
**characterised in that** the outer stamp (1) comprises means (35), preferably vacuum bores for holding the band label (39) in place.

3. Insertion stamp according to claim 1 or 2,
**characterised in that** the inner stamp (7) comprises means (23, 27), preferably at least one suction device for holding the base label (42) in place.

4. Insertion stamp according to one of the claims 1 to 3,
**characterised in that** the inner stamp (7) is slidable by a drive (3).

5. Insertion stamp according to one of the claims 1 to 4,
**characterised in that** the inner stamp (7) is loaded in the direction of a initial position, preferably spring-loaded.

6. Insertion stamp according to one of the claims 1 to 5,
**characterised in that** the inner stamp (7) is slidable to the outer stamp (1) in a limited extent.

7. Insertion stamp according to one of the claims 1 to 6,
**characterised in that** the sliding path of the inner stamp (7) is limited by a stop.

8. Insertion stamp according to claim 7,
**characterised in that** the outer stamp (1) comprises at least one stop (29, 51), placed within the sliding path of the inner stamp (7).

9. Insertion stamp according to one of the claims 1 to 8,
**characterised in that** the outer stamp (1) comprises at least one guide element (29), acting axially for the inner stamp (7).

10. Method for inserting band labels and base labels (39, 42) into an injection mould (34) with an insertion stamp according to one of the claims 1 to 9, in which the labels (39, 42) are inserted by an insertion stamp (4), whereby the band label and the base label (39, 42) are inserted into the injection mould (34) by a single stroke of the insertion stamp (4), whereby after the feeding-in into the injection mould (34), the insertion stamp (4) first delivers the band label (39) and afterwards the base label (42) delivers by means of an exit motion of the inner stamp (7) the base label (42) to the injection mould (34).

11. Method according to claim 10,
**characterised in that** the insertion stamp (4) transfers the labels (39, 42) thus, that the base label (42) overlaps the band label (39) on its inner side.

## Revendications

1. Timbre d'insertion pour l'insertion d'au moins une banderole et d'au moins une étiquette de sol dans un moule de moulage par injection pour la fabrication des récipients plastiques,
**caractérisé en ce que** le piston d'insertion (4) comprend un piston extérieur (1) et un piston intérieur (7), lequel est déplaçable contre le piston extérieur (1).

2. Timbre d'insertion selon revendication 1,
**caractérisé en ce que** le piston extérieur (1) comprend des moyens (35) pour la fixation d'étiquette de banderole (39), de préférence des trous à vide.

3. Timbre d'insertion selon revendication 1 ou 2,
**caractérisé en ce que** le piston intérieur (7) comprend des moyens (23, 27) pour la fixation de l'étiquette de fond (42) de préférence au moins un aspirateur.

4. Timbre d'insertion selon une des revendications 1 à 3,
**caractérisé en ce que** le piston intérieur (7) est déplaçable au moyen d'un entraînement (3).

5. Timbre d'insertion selon une des revendications 1 à 4,
**caractérisé en ce que** le piston intérieur (7) est chargé, de préférence par ressort, en direction d'une position normale.

6. Timbre d'insertion selon une des revendications 1 à 5,
**caractérisé en ce que** le piston intérieur (7) est déplaçable par rapport au piston extérieur (1) dans une certaine limite.

7. Timbre d'insertion selon une des revendications 1 à 6,
**caractérisé en ce que** le mouvement de translation du piston intérieur (7) est limité par une butée.

8. Timbre d'insertion selon revendication 7,
**caractérisé en ce que** le piston extérieur (1) comprend au moins une butée (29, 51), placée dans le mouvement de translation du piston intérieur (7).

9. Timbre d'insertion selon une des revendications 1 à 8, **caractérisé en ce que** piston extérieur (1) comprend pour le piston intérieur (7) au moins un élément conducteur (29) agissant axialement.

10. Procédé pour l'insertion de banderoles et d'étiquettes de sol dans un moule de moulage par injecton (34) avec un piston d'insertion selon une des revendications 1 à 9, dans lequel les étiqettes (39, 42) sont insérées au moyen d'un piston d'insertion (4), la banderole et l'étiquette de sol (39, 42) étant insérées dans une course du piston d'insertion (4) dans le moule de moulage par injection (34), le piston d'insertion (4) après l'introduction dans le moule de moulage par injection (34) transférant au moule de moulage par injection (34) tout d'abord la banderole (39) et ensuite l'étiquette de sol (42) par un mouvement de sortie du piston intérieur (7).

11. Procédé selon revendication 10,
**caractérisé en ce que** le piston d'insertion (4) transfère les étiquettes (39, 42) de façon à ce que l'étiquette de sol (42) chevauche à l'interieur la banderole (39).
